# DEMANDE DE BREVET EUROPEEN

(11) **EP 0 855 136 A1**
(43) Date de publication de la demande: **29.07.1998**
(21) Numéro de dépôt: 97440010.3
(22) Date de dépôt: 24.01.1997
(51) Int. Cl.: A01K 5/02, A01K 5/00

(54) **Godet mélangeur destiné à effectuer le mélange et la distribution de produits granulaires ou fibreux en vrac**

(71) Demandeur: Ets. Desvoys & Fils, 53190 Landivy (FR)
(72) Inventeur: Desvoys, Maurice c/o Ets. Desvoys & Fils, 53190 Landivy (FR)
(74) Mandataire: Arbousse-Bastide, Jean-Claude Philippe

(57) **Abrégé**

Godet mélangeur (1) destiné à effectuer le mélange et la distribution de produits granulaires ou fibreux en vrac, en vue notamment de l'alimentation du bétail, du type comprenant deux parois longitudinales (10,11) disposées angulairement et reliées par un fond arrondi (12) et deux parois latérales (13, 14), une vis distributrice (2) étant disposée à proximité de son fond arrondi (12) pour transporter les produits alimentaires vers une ouverture d'évacuation (130) pratiquée dans l'une des parois latérales (13).

Le godet (1) comprend en outre deux axes cylindriques (3,4), disposés parallèlement à la vis distributrice (2), sensiblement à égale distance de cette dernière et à proximité des parois longitudinales (10, 11) du godet (1), le long desquels se trouvent disposées deux rangées (31, 32 ; 41, 42) de pales (33, 43) assurant le mélange des produits alimentaires, les pales (33, 43) de chaque rangée (31, 32 ; 41, 42) s'inscrivant dans un segment d'hélicoïde.

## Description

La présente invention a pour objet, dans le domaine de la machinerie agricole, un godet mélangeur destiné à effectuer le mélange et la distribution de produits granulaires ou fibreux en vrac, en vue notamment de l'alimentation du bétail.

Les godets actuellement utilisés pour mélanger et distribuer dans des auges des produits alimentaires destinés aux animaux comportent généralement deux parois longitudinales disposées angulairement et reliées par un fond arrondi et deux parois latérales délimitant l'espace intérieur desdits godets. Ces godets sont assujettis sur un bras porteur fixé sur un tracteur agricole et comprennent intérieurement une vis sans fin disposée parallèlement à leur fond, mue en rotation par un moteur hydraulique et réalisant le transport et le mélange des produits.

Toutefois dans ces godets le mélange des produits n'est pas toujours bien réalisé, occasionnant fréquemment des problèmes de bourrage.

Le document EP-A-0276645 décrit une machine mélangeuse et distributrice d'aliments pour bétail qui comprend une cuve animée d'un mouvement de rotation autour d'un axe de révolution horizontal, pourvue d'une ouverture de chargement dans son fond arrière, et renfermant à sa partie avant une vis hélicoïdale pour le transport des aliments.

Le document EP-A-0699387 décrit un dispositif mobile de mélange et de distribution d'aliments pour bétail qui comporte d'une part un tambour mélangeur, mobile en rotation autour d'un axe longitudinal et muni sur son périmètre intérieur de pales mélangeuses, et d'autre part une vis de déversement centrale pénétrant à l'intérieur dudit tambour par une ouverture de déversement.

Toutefois, si ces dispositifs permettent d'obtenir un bon mélange des aliments, ils sont d'une structure complexe et ne peuvent être adaptés sur un bras porteur fixé sur un tracteur agricole.

Le problème se posait donc de réaliser à la fois un bon mélange des produits alimentaires, et une distribution efficace sans risques de bourrage, et de pouvoir solidariser le dispositif à l'extrémité d'un bras porteur fixé sur un tracteur agricole ou autre engin de transport.

La présente invention a pour but de résoudre ce problème en proposant un godet mélangeur et distributeur qui se caractérise essentiellement en ce qu'il comprend d'une part une vis distributrice, disposée à proximité de son fond arrondi, parallèlement audit fond, apte à transporter les produits alimentaires vers une ouverture d'évacuation pratiquée dans l'une des parois latérales dudit godet, et d'autre part deux axes cylindriques, disposés parallèlement à ladite vis distributrice, situés sensiblement à égale distance de cette dernière et à proximité de l'une des parois longitudinales dudit godet, et le long desquels se trouvent fixées deux rangées de pales de mêmes dimensions assurant le mélange des produits alimentaires, les pales de chaque rangée s'inscrivant un segment d'hélicoïde.

Selon une caractéristique additionnelle de l'invention la vis distributrice est une vis d'Archimède ou une vis d'Archimède tronquée.

Selon une autre caractéristique additionnelle de l'invention la vis distributrice est constituée d'un axe cylindrique le long duquel sont solidarisées deux rangées de pales disposées de manière que les pales d'une rangée soient sensiblement diamétralement opposées aux pales de l'autre rangée, lesdites pales s'inscrivant dans des segments de deux hélicoïdes de même diamètre, un hélicoïde pour chaque rangée.

Dans un mode de réalisation préférentiel de l'invention, particulièrement adapté au cas d'un entraînement par moteur hydraulique, les pales qui sont fixées sur les deux axes cylindriques et qui assurent le mélange des produits alimentaires sont de forme sensiblement rectangulaire et sont légèrement inclinées, par rapport à l'axe auquel elles sont solidarisées, vers l'extrémité dudit axe proche de l'ouverture d'évacuation des aliments. En outre chaque hélicoïde possède un pas variable, la deuxième série de pales, proche de l'ouverture d'évacuation des aliments, comprenant environ moitié moins de pales que la première série et présentant un pas supérieur à celui de ladite première série.

Selon une caractéristique additionnelle de l'invention la dernière pale de chaque axe, la plus proche de l'ouverture d'évacuation des aliments, est inclinée vers l'extrémité opposée dudit axe.

Selon une autre caractéristique additionnelle de l'invention les pales des axes cylindriques sont biseautées sur au moins un de leurs cotés perpendiculaires à l'axe correspondant.

Les avantages et les caractéristiques de la présente invention ressortiront plus clairement de la description qui suit et qui se rapporte au dessin annexé, étant entendu que cette description ne présente aucun caractère limitatif vis à vis de l'invention.

Dans le dessin annexé :
- la figure 1 représente une vue en perspective d'un godet selon l'invention.
- la figure 2a représente une vue latérale du même godet.
- la figure 2b représente une vue en perspective d'une pale d'un arbre mélangeur.
- la figure 3a représente une vue en plan d'une rangée de pales d'un axe cylindrique.
- la figure 3b représente une vue en plan de l'autre rangée de pales du même axe cylindrique.

Pour plus de clarté, la description qui suit est faite en tenant compte du sens d'avancement des produits alimentaires vers l'ouverture d'évacuation, ce qui justifie l'emploi de termes comme "avant" et "arrière".

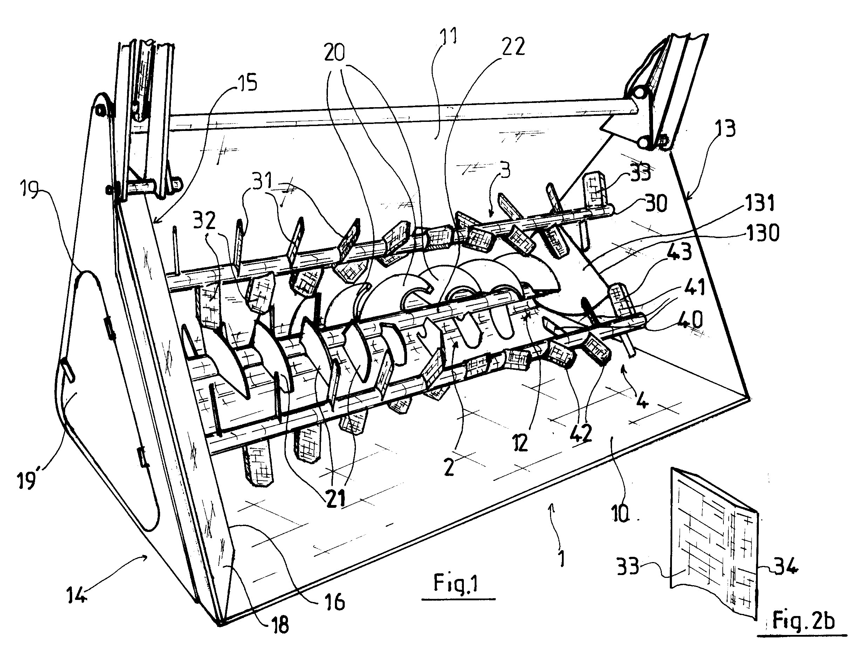

Si on se réfère à la figure 1 on peut voir qu'un godet 1 selon l'invention, destiné au mélange et à la distribution de produits alimentaires, comprend deux parois longitudinales 10 et 11 disposées angulairement et raccordées par un fond arrondi 12, et deux parois latérales 13 et 14, perpendiculaires aux parois longitudinales 10,11, la paroi antérieure 13 comportant une ouverture 130 d'évacuation des aliments fermée par une trappe 131.

Le godet 1 présente un compartiment 15 délimité par la paroi arrière 14 et une paroi interne 16 parallèle à cette dernière, solidarisée aux parois longitudinales 10,11 et à la paroi arrière 14 au moyen d'un pan incliné 18. Le compartiment 15 est accessible par une ouverture 19 pratiquée dans la paroi arrière 14, fermée par une porte 19' manoeuvrable de l'extérieur.

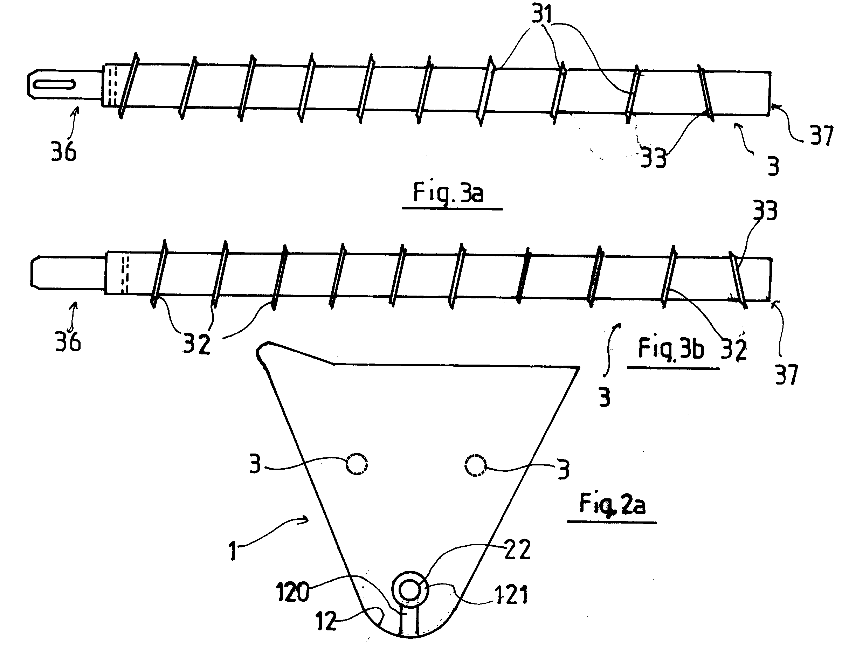

On peut voir également que le godet 1 abrite une vis distributrice 2 disposée à proximité de son fond 12, parallèlement à ce dernier et aux parois longitudinales 10,11 et maintenue par ses extrémités dont l'une est engagée dans un palier 120 relié au fond 12 par un axe 121, comme on peut le voir sur la figure 2a, et l'autre est engagée dans une ouverture, non visible, pratiquée dans la paroi interne 16 du compartiment 15. La vis 2 est mue en rotation par un pignon d'entrainement relié à un motoréducteur, non visibles, installés dans le compartiment 15 et elle assure le transport des produits vers l'ouverture d'évacuation 130.

On peut voir également que deux rangées de pales 20 et 21 sont solidarisées sur l'axe 22 de la vis distributrice 2 de manière que les pales 20 d'une rangée soient sensiblement diamétralement opposées aux pales 21 de l'autre rangée, et que les pales 20 ou 21 d'une même rangée soient inscrites dans un hélicoïde.

Le godet 1 contient également deux axes 3 et 4 destinés au mélange des produits alimentaires, disposés parallèlement à la vis distributrice 2, maintenus par leurs extrémités insérées dans des ouvertures, respectivement 30 et 40, pratiquées dans la paroi latérale 13 et dans des ouvertures, non visibles, pratiquées dans la paroi interne 16. Les axes 3 et 4 sont mus en rotation par le motoréducteur du compartiment 14 par l'intermédiaire d'un pignon d'entrainement non représenté et portent chacun deux rangées 31,32 et 41,42 de pales rectangulaires de mêmes dimensions ,respectivement 33 et 43, solidarisées aux arbres 3,4 par l'un de leurs petits côtés et dont les deux côtés de plus grande longueur 34, 44 sont biseautés de manière à faciliter le mélange des produits alimentaires par hachage partiel de ces produits.

On peut voir également que les axes 33,43 des arbres 3,4 sont disposées de manière que les pales 33,43 d'une rangée 31,41 soient sensiblement diamétralement opposées aux pales 33,43 de l'autre rangée 32,42 et que les pales 33,43 d'une même rangée soient inscrites dans un hélicoïde décalé latéralement par rapport à l'autre hélicoïde.

La vis distributrice 2 et les axes 3 et 4 sont avantageusement disposés de manière à former un dièdre dont la vis 2 forme l'arête.

Cette disposition particulière de la vis 2 et des deux axes 3 et 4, ainsi que la forme et la disposition des différentes pales 20, 33 et 43 permettent d'assurer un mélange très efficace des produits en évitant les risques de bourrage auxquels les dispositifs existants ne permettent pas d'échapper.

D'autre part le godet selon l'invention est facilement solidarisable au bras porteur fixé sur un tracteur agricole ou autre engin de transport.

Si on se réfère aux figures 3a,3b on peut voir que dans un mode de réalisation avantageux chaque hélicoïde d'un axe 3,4, dont seul l'axe 3 est représenté, comporte 9 pales réparties en deux séries de pas différents, et que l'écart entre les pales 33 de la série la plus proche de l'extrémité 36 de l'axe 3 solidarisée au pignon d'entrainement est inférieur à l'écart entre les pales 33 de l'autre série.

On peut voir également que si les pales 33 sont légèrement inclinées par rapport à l'axe 3 vers l'extrémité 37 opposée à celle 36 solidarisée au pignon d'entrainement, non représenté, la dernière pale de chaque rangée, proche de l'extrémité 37, est inclinée vers l'extrémité 36.

En outre l'écart entre la dernière pale de la première série de l'une des deux rangées, visible, sur la figure 3b, est supérieur à l'écart séparant les pales de la première série et inférieur à l'écart séparant les pales de la deuxième série.

Les différents écarts entre les pales permettent d'améliorer encore le mélange des produits alimentaires, comme les essais effectués l'ont mis en évidence.

## Revendications

1. Godet mélangeur (1) destiné à effectuer le mélange et la distribution de produits granulaires ou fibreux en vrac, en vue notamment de l'alimentation du bétail, du type comprenant deux parois longitudinales (10,11) disposées angulairement et reliées par un fond arrondi (12) et deux parois latérales (13, 14) délimitant l'espace intérieur du godet (1), une vis distributrice (2) étant disposée à proximité de son fond arrondi (12) parallèlement audit fond (12), pour transporter les produits alimentaires vers une ouverture d'évacuation (130) pratiquée dans l'une des parois latérales (13) dudit godet (1), caractérisé en ce qu'il comprend deux axes cylindriques (3,4), disposés parallèlement à ladite vis distributrice (2), sensiblement à égale distance de cette dernière et à proximité des parois longitudinales (10, 11) dudit godet (1), le long desquels se trouvent disposées deux rangées (31, 32 ; 41, 42) de pales (33, 43) assurant le mélange des produits alimentaires, les pales (33, 43) de chaque rangée (31, 32 ; 41, 42) s'inscrivant dans un segment d'hélicoïde.

2. Godet selon la revendication 1 caractérisé en ce que la vis distributrice (2) est une vis d'Archimède ou une vis d'Archimède tronquée.

3. Godet selon la revendication 1 caractérisé en ce que la vis distributrice (2) est constituée d'un axe cylindrique (22) le long duquel sont solidarisées deux rangées (20,21) de pales (23) disposées de manière que les pales (23) d'une rangée (20) soient sensiblement diamétralement opposées aux pales (23) de l'autre rangée (21), lesdites pales (20) étant des segments de deux hélicoïdes de même diamètre, un hélicoïde pour chaque rangée (20,21).

4. Godet selon l'une quelconque des revendications 1 à 3 caractérisé en ce que les pales (33,43) qui assurent le mélange des produits alimentaires sont de forme sensiblement rectangulaire et sont légèrement inclinées par rapport à l'axe (3,4) auquel elles sont solidarisees vers l'extrémité (36) dudit axe (3,4) proche de l'ouverture d'évacuation des aliments et en ce que chaque hélicoïde possède un pas variable, la deuxième série de pales (33,43), proche de l'ouverture (130) d'évacuation des aliments, comprenant environ moitié moins de pales que la première série et présentant un pas supérieur à celui de ladite première série.

5. Godet selon la revendication 4 caractérisé en ce que la dernière pale (33,43) de chaque axe (3,4), la plus proche de l'ouverture d'évacuation (130) des aliments, est incliné vers l'extrémité opposée (37) dudit axe (3,4).

6. Godet selon l'une des revendications 4 ou 5 caractérisé en ce que l'écart entre la dernière pale de la première série de l'une des deux rangées est supérieur à l'écart séparant les pales de la première série et inférieur à l'écart séparant les pales de la deuxième série.

7. Godet selon l'une des revendications 4 à 6 caractérisé en ce que les pales (33,43) des axes cylindriques (3,4) sont biseautées sur au moins un de leurs cotés (34,44).
